# DEMANDE DE BREVET EUROPEEN

(11) **EP 1 398 191 A1**
(43) Date de publication de la demande: **17.03.2004**
(21) Numéro de dépôt: 03292036.5
(22) Date de dépôt: 18.08.2003
(51) Int. Cl.: B60J 5/14, B60J 10/08

(54) **Dispositif de guidage d'un ouvrant coulissant à lamelles articulées**

(30) Priorité: 16.09.2002 FR 0211452
(71) Demandeur: Peugeot Citroen Automobiles SA, 78943 Vélizy-Villacoublay Cedex (FR)
(72) Inventeur: Monnier, Marcel, 78580 Maule (FR); Frankinet, Gilles, 27140 Gisors (FR); Caron, Philippe, 27950 Saint-Marcel (FR); Charnoz, Frédéric, 78540 Vernouillet (FR)
(74) Mandataire: Lanceplaine, Jean-Claude

(57) **Abrégé**

L'invention concerne un dispositif de guidage d'un ouvrant coulissant, par exemple pour véhicule automobile, du type comprenant des lamelles (11) articulées et déplaçables verticalement entre une position de libération d'une ouverture et une position de fermeture de ladite ouverture, caractérisé en ce qu'il comporte, de part et d'autre de l'ouverture, un rail extérieur (12) et un rail intérieur (13), des moyens (14, 15) escamotables de blocage des lamelles (11 ) entre les rails (12, 13) dans une position intermédiaire et dans la position de fermeture et assurant l'étanchéité dans ladite position de fermeture et des moyens (17, 18) de commande desdits moyens de blocage.

## Description

La présente invention concerne un dispositif de guidage d'un ouvrant coulissant à lamelles articulées.

L'invention concerne également un véhicule automobile équipé d'un tel dispositif de guidage d'un ouvrant coulissant.

Ce type d'ouvrant trouve son application dans le domaine de l'automobile ou dans d'autres domaines, comme par exemple les chambres froides de conservation des aliments ou des produits délicats ou encore les salles blanches.

Les ouvrants coulissants à lamelles articulées présentent par rapport aux ouvrants classiques à porte battante ou à porte rigide coulissante des avantages qui résident dans l'absence d'encombrement en position ouverte de l'ouvrant et dans la facilité d'accès à la zone intérieure.

Par contre, les ouvrants de ce genre avec des lamelles articulées demandent pour assurer un déplacement sans frottement générateur d'usure et de perte d'énergie, des guidages présentant un jeu suffisant pour éviter les coincements, en particulier dans les secteurs à faible rayon de courbure.

Ce jeu important est évidemment impropre à assurer l'étanchéité vis à vis de l'espace extérieur.

De plus, les battements possibles des lamelles entre les éléments de guidage engendrent des bruits conséquents lors du déplacement notamment dans un véhicule automobile, avec également des risques d'usure, voire de rupture de ces lamelles.

L'invention a pour but de proposer un dispositif de guidage d'un ouvrant coulissant qui évite les inconvénients précédemment mentionnés et qui assure également la fonction d'étanchéité en position fermée de cet ouvrant.

L'invention a donc pour objet un dispositif de guidage d'un ouvrant coulissant, par exemple pour véhicule automobile, du type comprenant des lamelles articulées et déplaçables verticalement entre une position de libération d'une ouverture et une position de fermeture de ladite ouverture, caractérisé en ce qu'il comprend, de part et d'autre de l'ouverture, un rail extérieur et un rail intérieur, des moyens escamotables de blocage des lamelles entre les rails dans une position intermédiaire et dans la position de fermeture et assurant l'étanchéité dans ladite position de fermeture et des moyens de commande desdits moyens de blocage.

Selon d'autres caractéristiques de l'invention :
- les rails ménagent avec le bord latéral des lamelles un espace suffisant pour le déplacement desdites lamelles entre les deux positions,
- les moyens de blocage sont déplaçables perpendiculairement à un plan passant par les lamelles et vers le bord latéral desdites lamelles,
- les moyens de blocage comprennent un joint élastique compressible fixé sur un support ayant un tracé sensiblement parallèle au rail et déplaçable par les moyens de commande entre une première position dans laquelle le joint est écarté du bord latéral adjacent des lamelles et une seconde position dans laquelle le joint est appliqué contre ce bord latéral pour bloquer les lamelles entre ledit joint et ledit rail extérieur,
- le rail extérieur est formé par un joint élastique compressible monté sur un support fixe et les moyens de blocage comprennent un rail formant le rail intérieur et ayant un tracé sensiblement parallèle au joint, le rail intérieur étant déplaçable par les moyens de commande entre une première position dans laquelle ce rail intérieur est écarté du bord latéral adjacent des lamelles et une seconde position dans laquelle le rail intérieur est appliqué contre le bord latéral pour bloquer les lamelles entre ledit joint et ledit rail intérieur,
- les moyens de blocage comprennent un profilé en forme de U dont les ailes forment les rails extérieur et intérieur et un joint élastique compressible monté le long de chaque bord de l'ouverture, ledit profilé étant déplaçable par les moyens de commande entre une première position dans laquelle le bord latéral des lamelles est guidé par les ailes du profilé et une seconde position dans laquelle ce bord latéral est bloqué entre l'aile intérieure dudit profilé et ledit joint,
- les moyens de blocage sont déplaçables dans un plan passant par les lamelles et vers le rebord externe desdites lamelles,
- les rails extérieur et intérieur sont montés chacun sur une aile d'un profilé en forme de U et les moyens de blocage comprennent un joint fixé sur un support disposé dans le profilé et déplaçable par les moyens de commande entre une première position dans laquelle le joint est écarté du rebord externe des lamelles et une seconde position dans laquelle le joint est appliqué sur ledit rebord externe pour bloquer lesdites lamelles.

L'invention a encore pour objet un véhicule automobile, caractérisé en ce qu'il comporte au moins un dispositif de guidage d'un ouvrant coulissant tel que précédemment mentionné.

D'autres caractéristiques et avantages de l'invention apparaîtront au cours de la description qui va suivre, donnée uniquement à titre d'exemple et faite en référence aux dessins annexés, sur lesquels :
- la Fig. 1 est une vue schématique en élévation d'un véhicule automobile équipé d'un ouvrant coulissant muni d'un dispositif de guidage conforme à l'invention,
- la Fig. 2 est une vue schématique en coupe verticale d'un premier mode de réalisation d'un dispositif de guidage conforme à l'invention,
- la Fig. 3 est une vue en coupe transversale du dispositif de guidage du dispositif de guidage de la Fig. 2 en position de coulissement de l'ouvrant,
- la Fig. 4 est une vue en coupe transversale du dispositif de guidage de la Fig. 1 en position de blocage et d'étanchéité de l'ouvrant,
- la Fig. 5 est une vue schématique en coupe verticale d'un second mode de réalisation d'un dispositif de guidage conforme à l'invention,
- la Fig. 6 est une vue en coupe transversale du dispositif de guidage de la Fig. 5 en position de coulissement de l'ouvrant,
- la Fig. 7 est une vue en coupe transversale du dispositif de guidage de la Fig. 5 en position de blocage et d'étanchéité de l'ouvrant,
- la Fig. 8 est une vue en élévation d'une variante d'un levier des moyens de blocage de l'ouvrant,
- la Fig. 9 est une demi-vue en coupe transversale d'un troisième mode de réalisation d'un dispositif de guidage conforme à l'invention, dans la position de coulissement de l'ouvrant,
- la Fig. 10 est une demi-vue en coupe transversale du troisième mode de réalisation du dispositif de guidage dans la position de blocage et d'étanchéité de l'ouvrant,
- la Fig. 11 est une vue de face d'une quatrième variante du dispositif de guidage conforme à l'invention,
- la Fig. 12 est une vue en coupe transversale selon la ligne 12-12 de la Fig. 11 du dispositif de guidage dans la position de coulissement de l'ouvrant,
- la Fig. 13 est une vue de face du dispositif de guidage dans la position de blocage de l'ouvrant,
- la Fig. 14 est une vue en coupe transversale selon la ligne 14-14 de la Fig. 13,
- la Fig. 15 est une demi-vue en coupe transversale d'une variante du quatrième mode de réalisation du dispositif de guidage dans la position de coulissement de l'ouvrant,
- la Fig. 16 est une demi-vue en coupe transversale de la variante représentée à la Fig. 15 dans la position de blocage de l'ouvrant.

La description qui suit sera faite en rapport avec un véhicule automobile comportant un ouvrant coulissant équipé d'un dispositif de guidage conforme à l'invention.

Le dispositif de guidage selon l'invention peut être adapté avantageusement à d'autres domaines que l'automobile où il est important d'installer des ouvrants ou des écrans mobiles destinés à être immobilisés et qui doivent assurer une bonne étanchéité vis à vis de l'espace extérieur, comme par exemple les chambres froides de conservation des aliments ou des produits délicats ou encore les salles blanches.

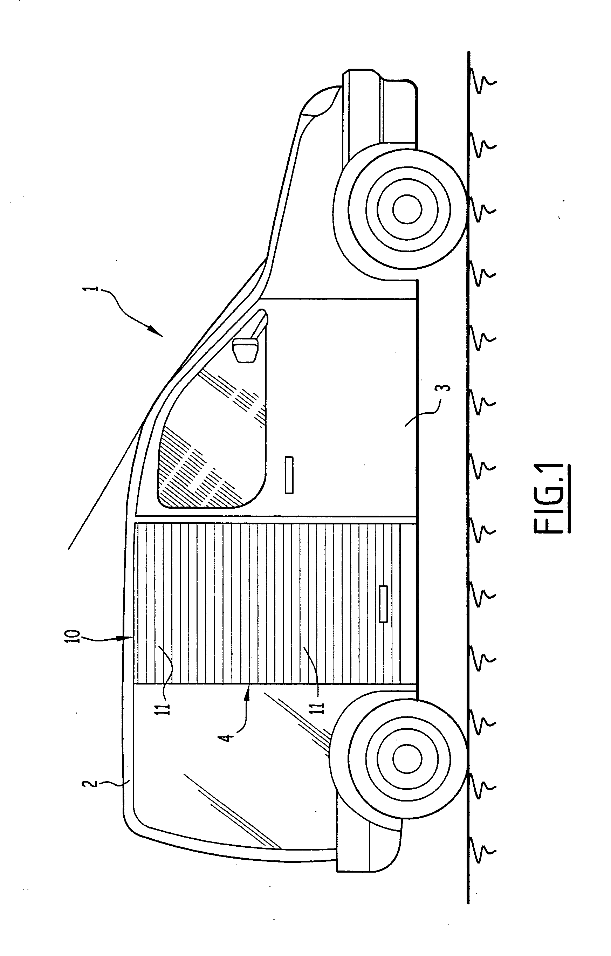

Sur la Fig. 1, on a représenté schématiquement à titre d'exemple un véhicule automobile désigné dans son ensemble par la référence 1 et qui comporte, de manière classique, une caisse 2 munie de portes avant 3 pivotantes.

Au moins une des parois latérales de ce véhicule automobile 1 est équipée d'un ouvrant 10 coulissant verticalement entre une position de libération d'une ouverture 4 ménagée dans la caisse du véhicule automobile donnant accès à l'intérieur de ce véhicule automobile et une position de fermeture de ladite ouverture 4.

L'ouvrant coulissant 10 peut également être installé à l'arrière du véhicule automobile 1.

Ainsi que représenté sur les figures, l'ouvrant coulissant 10 est composé de lamelles 11 articulées ou réunies entre elles par des parties flexibles.

D'une manière générale, le dispositif de guidage selon l'invention comporte, de part et d'autre de l'ouverture 4, un rail extérieur 12 et un rail intérieur 13, des moyens escamotables de blocage des lamelles 11 entre les rails 12 et 13 dans une position intermédiaire et dans la position de fermeture et assurant également la fonction d'étanchéité de l'ouvrant dans ladite position de fermeture et des moyens de commande desdits moyens de blocage.

Les rails 12 et 13 ménagent, avec le bord latéral 11a des lamelles 11, un espace suffisant, en particulier dans la partie la plus incurvée des rails 12 et 13, pour que les lamelles 11 puissent circuler sans coincement et sans frottement sensible.

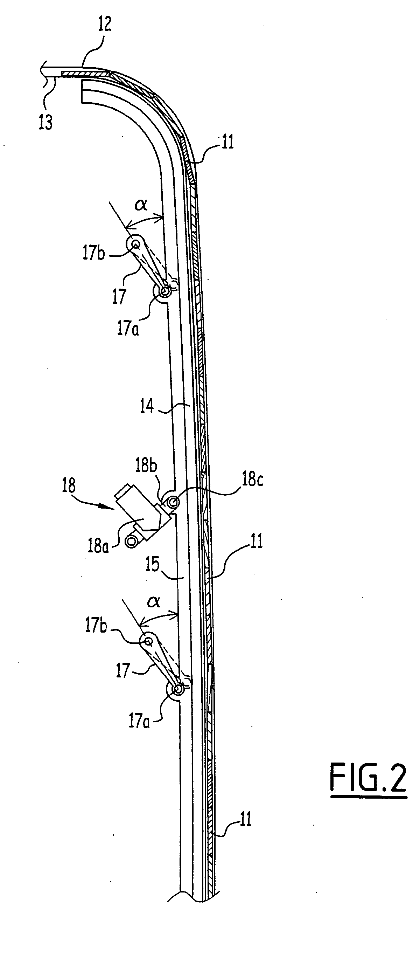

En se reportant maintenant aux Figs. 2 à 4, on va décrire un premier mode de réalisation du dispositif de guidage.

Ce dispositif de guidage comporte une partie disposée d'un côté de l'ouverture 4 et une partie disposée de l'autre côté de ladite ouverture 4, les deux parties étant absolument identiques. Dans la description qui va suivre, on décrira une partie du dispositif de guidage.

Dans ce premier mode de réalisation, les moyens escamotables de blocage des lamelles 11 dans une position intermédiaire ou dans la position de fermeture et qui assurent également la fonction d'étanchéité dans cette position de fermeture, sont déplaçables perpendiculairement à un plan passant par les lamelles 11 et vers le bord latéral 11a de ces lamelles 11.

Ces moyens de blocage comprennent un joint 14 élastique et compressible fixé sur un support 15 dont le tracé est sensiblement parallèle au tracé des rails 12 et 13.

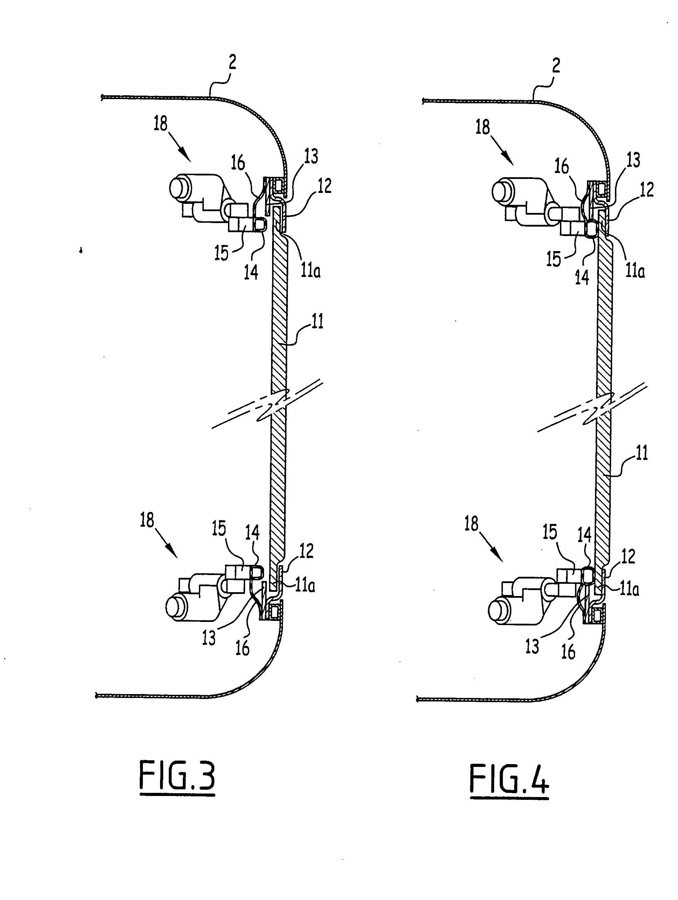

Ainsi que montré à la Fig. 3, le joint 14 est relié au rail intérieur 13 par une paroi souple 16.

Le support 15 du joint 14 est relié à au moins deux leviers 17 parallèles et comportant chacun une première extrémité 17a articulée sur le support 15 et une seconde extrémité 17b articulée sur un élément fixe, comme par exemple la caisse 2 du véhicule automobile.

Chaque levier 17 forme avec le support 15 un angle α inférieur à 90° et l'inclinaison de ces leviers 17 est choisie pour que leur rotation autour de l'extrémité articulée 17b permette le rapprochement du joint 14 avec toutes les lamelles 11 de l'ouvrant 10.

Les moyens de commande du déplacement du support 15 et du joint 14 sont formés par au moins un actionneur 18 comportant un corps 18a articulé sur l'élément fixe constitué par la caisse 2 du véhicule automobile et une tige 18b dont l'extrémité libre 18c est articulée sur le support 15 du joint 14. Cet actionneur 18 est constitué par exemple par un vérin électrique linéaire ou par tout autre actionneur connu faisant appel à l'énergie électrique ou à l'énergie hydraulique ou encore par un moto-réducteur à mouvement rotatif avec came ou excentrique faisant également appel à l'énergie pneumatique ou hydraulique.

De préférence, la tige 18b de l'actionneur 18 se déplace selon une direction perpendiculaire aux leviers 17.

Au cours du coulissement des lamelles 11 entre les postions d'ouverture et de fermeture, l'actionneur 18 est en position rétractée de telle manière que le joint 14 et son support 15 dégagent l'espace de circulation des lamelles 11 entre les rails 12 et 13, comme représenté sur les Figs. 2 et 3.

Pour immobiliser les lamelles 11 de l'ouvrant 10 en position de fermeture de l'ouverture 4 ou dans une position intermédiaire, l'actionneur 18 est amené en position d'extension. L'extrémité libre 18c de la tige 18b est déplacée d'une longueur déterminée ce qui provoque la rotation de chaque levier 17 autour de son extrémité articulée 17b pour les amener dans une position représentée en pointillés sur la Fig. 2, les extrémités 17a de ces leviers 17 articulés sur le support 15 s'étant déplacées de la même longueur déterminée.

Du fait de l'inclinaison judicieuse des leviers 17, le support 15 du joint 14 s'est déplacé dans une direction oblique conduisant ce joint 14 à se rapprocher du bord latéral 11 a de toutes les lamelles 11. Le joint 14 se comprime et plaque fortement le bord latéral 11 a des lamelles 11 contre le rail extérieur 12, ainsi que représenté à la Fig. 4.

L'épaisseur et l'élasticité du joint 14 permettent d'assurer un contact continu avec le bord latéral 11a des lamelles 11 de façon à réaliser l'immobilisation de ces lamelles 11 dans une position intermédiaire ou dans la position de fermeture ainsi que l'étanchéité dans ladite position de fermeture vis à vis de l'espace extérieur.

Cette étanchéité est complétée par la paroi souple 16 qui peut être formée par un voile souple, un soufflet ou un joint à lèvre coulissant sur une paroi lisse ou par tout autre élément de liaison continu et souple.

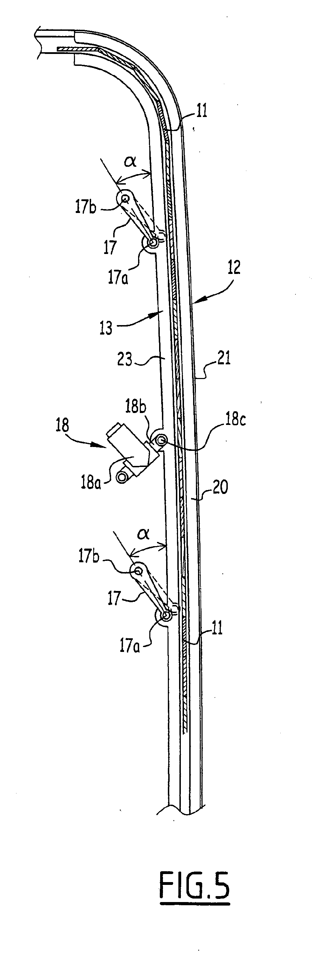

En se reportant maintenant aux Figs 5 à 7, on va décrire un deuxième mode de réalisation, les éléments communs au premier mode de réalisation étant désignés par les mêmes références.

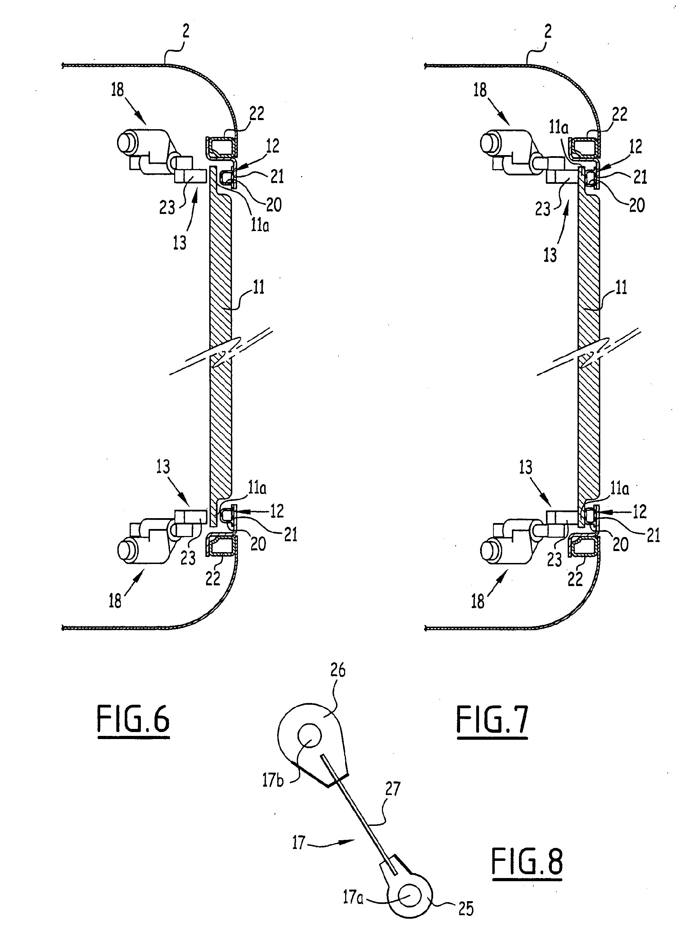

Dans ce mode de réalisation, le rail extérieur 12 est formé par un joint 20 élastique et compressible fixé sur un support 21, lui-même relié par un élément de renfort 22 à un élément fixe constitué par la caisse 2 (Fig. 6).

Les moyens de blocage des lamelles 11 comprennent un rail 23 mobile formant le rail intérieur 13 et ayant un tracé sensiblement parallèle au joint 20 et au support 21.

Comme représenté à la Fig. 5, le rail mobile 23 est relié à au moins deux leviers 17 qui sont montés de la même manière que dans le précédent mode de réalisation. Dans ce cas également, les moyens de commande du déplacement du rail mobile 23 sont constitués par un actionneur 18.

En position rétractée de l'actionneur 18, le rail mobile 23, le joint 20 et son support 21 délimitent l'espace de circulation du bord latéral 11a de chaque lamelle 11.

Lorsque l'actionneur 18 est activé pour bloquer l'ouvrant 10 dans une position intermédiaire ou dans la position de fermeture, l'extrémité libre 18c de la tige 18b se déplace d'une longueur déterminée ce qui conduit à une rotation de chaque levier 17 autour de l'extrémité articulée 17b sur la caisse 2 de façon à déplacer ces leviers 17 dans la position représentée en pointillés sur la Fig. 5.

Du fait de l'inclinaison judicieuse des leviers 17, le rail mobile 23 se déplace dans une direction oblique le conduisant à se rapprocher du bord latéral 11a de toutes les lamelles 11, puis à pousser ledit bord latéral 11 a de ces lamelles 11 fortement contre le joint 20, ainsi que représenté à la Fig. 7. Le joint 20 est de ce fait comprimé. L'épaisseur de ce joint 20 et son élasticité lui permettent d'assurer un contact continu avec le bord latéral 11a des lamelles 11 réalisant leur immobilisation dans une position intermédiaire ou dans la position de fermeture ainsi que l'étanchéité vis à vis de l'espace extérieur dans cette position de fermeture.

Selon une variante représentée à la Fig. 8, chaque levier 17 se compose d'un pied 25 qui forme l'articulation 17a et d'une tête 26 qui forme l'articulation 17b. Le pied 25 et la tête 26 sont réunis par une lame 27 rigide transversalement et flexible longitudinalement, comme par exemple une lame en acier à ressort de faible épaisseur. Cette configuration permet d'améliorer la répartition des efforts de pression destinés à assurer le maintien et l'étanchéité de l'ouvrant dans les différentes positions envisageables.

En effet, lorsque les leviers 17 subissent une certaine résistance, par exemple dans la direction horizontale, ils commencent à fléchir pour permettre la continuation du mouvement jusqu'au moment ou une résistance dans la direction verticale apparaît, et vice versa.

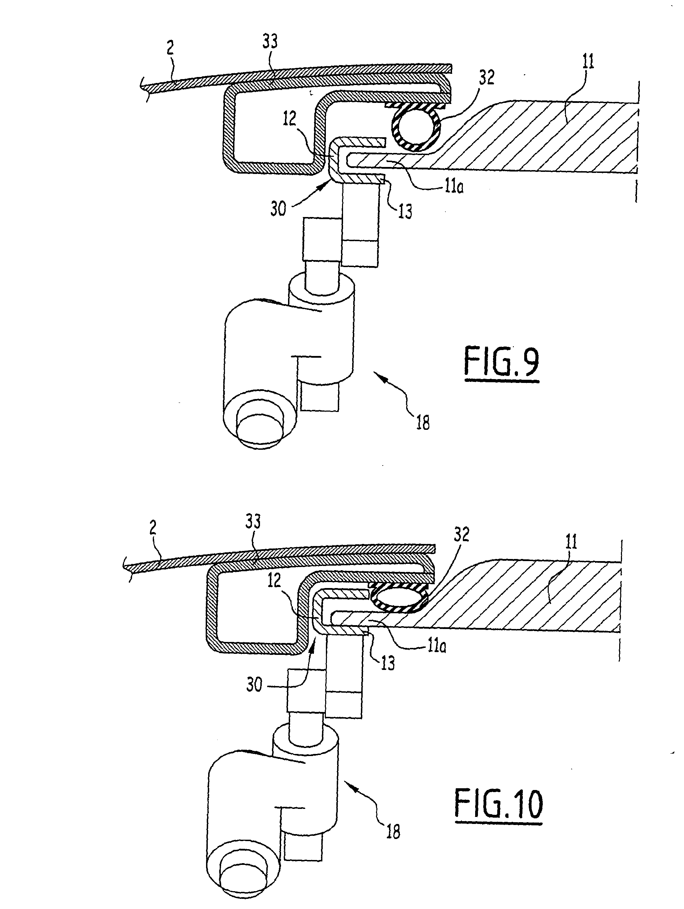

En se reportant maintenant aux Figs. 9 et 10, on va décrire un troisième mode de réalisation du dispositif de guidage, les éléments communs aux précédents modes de réalisation étant désignés par les mêmes références.

Dans ce mode de réalisation, les moyens de blocage comprennent un profilé 30 en forme de U dont les ailes forment le rail extérieur 12 et le rail intérieur 13. Ces moyens de blocage comprennent également un joint 32 élastique et compressible, fixé, par collage ou accrochage mécanique, sur un profilé 33 monté le long de chaque bord de l'ouverture 4 de la caisse 2 pour renforcer cette caisse au droit de cette ouverture.

Le profilé 30 est, comme dans les précédents modes de réalisation, reliés à au moins deux leviers 17.

Les moyens de commande du déplacement du profilé 30 sont aussi formés par au moins un actionneur 18 identique aux précédents modes de réalisation.

Lors du déplacement de l'ouvrant 10, le bord latéral 11a de chaque lamelle 11 circule dans le profilé 30 comme représenté à la Fig. 9.

Pour immobiliser les lamelles 11 de l'ouvrant 10 dans une position intermédiaire ou dans la position de fermeture en assurant l'étanchéité vis à vis de l'extérieur dans cette position de fermeture, l'actionneur 18 est activé ce qui a pour effet de déplacer le profilé 30 de telle manière que le rail intérieur 13 appui le bord latéral 11 a de chaque lamelle 11 sur le joint 32 et déforme ce joint 32 comme représenté à la Fig. 10. Dans cette configuration, le joint 32 assure l'étanchéité et l'immobilisation de l'ouvrant 10.

La forme des joints 14, 23 et 32 peut être de forme carrée, circulaire ou oblongue.

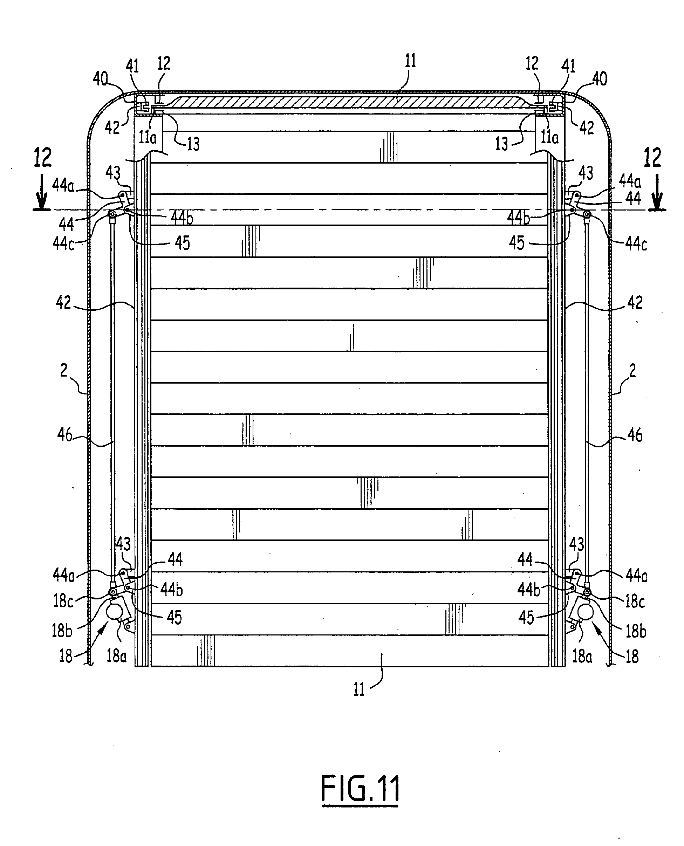

Dans un quatrième mode de réalisation représenté sur les Figs. 11 à 14, les moyens de blocage sont déplaçables dans un plan passant par les lamelles 11 et vers le rebord externe 11 b desdites lamelles 11.

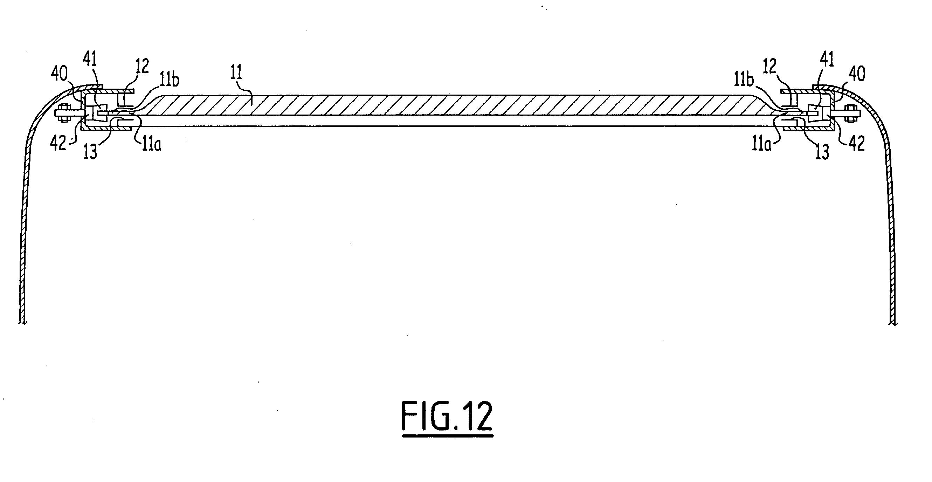

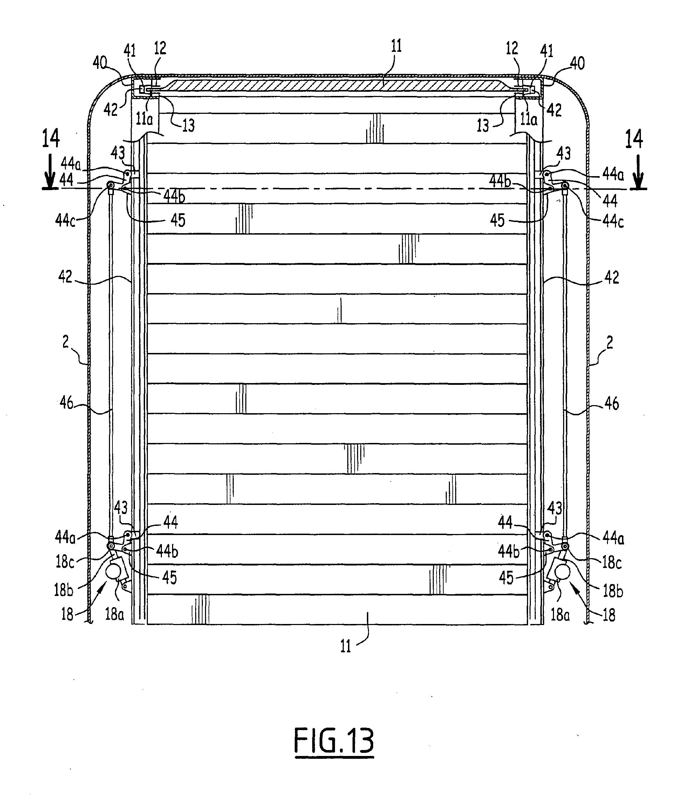

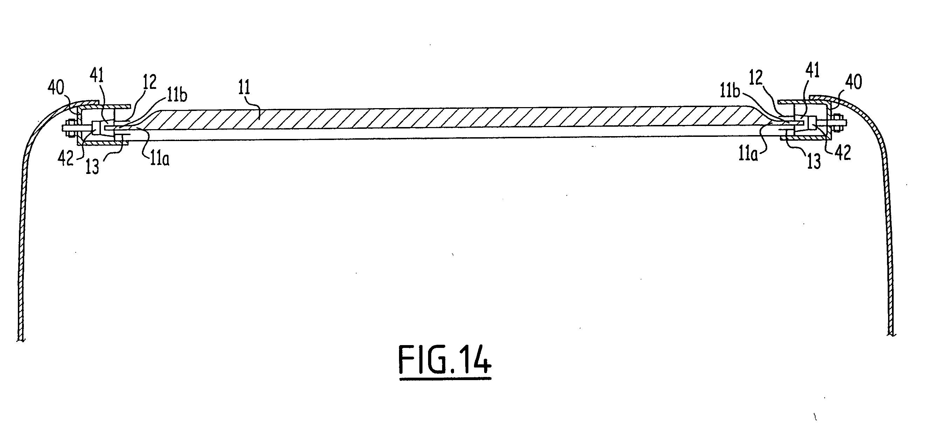

Dans ce mode de réalisation, le rail extérieur 12 et le rail intérieur 13 sont montés chacun sur une aile d'un profilé 40 en forme de U dont le tracé suit le profil de l'ouverture 4. Les moyens de blocage comprennent un joint 41 fixé sur un support 42 disposé dans le profilé 40. Le joint 41 et son support 42 sont déplaçables par des moyens de commande entre une première position dans laquelle le joint 41 est écarté du rebord externe 11 b des lamelles 11 (Figs. 11 et 12) et une seconde position dans laquelle ce joint 41 est appliqué sur ledit rebord externe 11 b pour bloquer lesdites lamelles 11 et assurer l'étanchéité dans la position de fermeture de l'ouvrant 10 (Figs. 13 et 14).

Pour cela, le support 42 est fixé à deux pattes 43 qui traversent chacune le profilé 31 par une ouverture, non représentée. Le support 42 est relié par l'intermédiaire des pattes 43 à au moins deux basculeurs 44 en forme de L comportant chacun une première extrémité 44a articulée sur la patte 43 du support 42, une articulation centrale 44b sur une chape 45 solidaire du profilé 40 et une seconde extrémité 44c reliée de manière articulée aux moyens de commande.

A cet effet, le mouvement des basculeurs 44 est synchronisé par une tige 46 reliant la seconde extrémité 44c de chacun de ses basculeurs 44.

Dans ce cas également, les moyens de commande sont formés par un actionneur 18 comportant un corps 18a articulé sur le profilé 40 et une tige 18b dont l'extrémité libre 18c est reliée à la seconde extrémité 44c d'un basculeur 44 et à la seconde extrémité 44c de l'autre basculeur 44 par l'intermédiaire de la tige 46.

L'actionneur 18 est constitué par exemple par un vérin électrique linéaire ou par tout autre type d'actionneur faisant appel à l'énergie électrique ou hydraulique ou encore par des moto-réducteurs à mouvement rotatif avec came ou excentrique faisant appel à l'énergie pneumatique ou hydraulique.

Dans l'exemple de réalisation représenté sur les Figs. 11 à 14, le joint 41 est formé par un joint à lèvres en forme de U. D'autres formes peuvent être envisagées pour le joint 41.

Lorsque l'actionneur 18 est en position rétractée, le joint 41 est écarté du rebord externe 11b des lamelles 11 de façon à dégager l'espace de circulation des lamelles 11 de l'ouvrant 10 (Figs. 11 et 12) qui peut donc être déplacé entre la position d'ouverture et la position de fermeture ou une position intermédiaire.

Pour assurer l'immobilisation de l'ouvrant 10 en position de fermeture ou dans une position intermédiaire, l'actionneur 18 est activé ce qui entraîne le déplacement de la tige 18b et la rotation du premier basculeur 44 ainsi que la rotation du second basculeur 44 par l'intermédiaire de la tige 46. Le support 42 et le joint 41 sont déplacés vers le centre de l'ouvrant 10 jusqu'au contact avec le rebord externe 11b des lamelles 11.

Ainsi, les bords externes 11b opposés des lamelles 11 sont immobilisés par les deux joints 41 et ces joints 41 assurent l'étanchéité avec l'espace extérieur dans la position de fermeture de l'ouvrant 10, comme représenté sur les Figs. 13 et 14.

La forme en U du joint 41 est définie de telle façon qu'en fin de course, le centre de ce joint 41 vienne coiffer étroitement le rebord externe 11b de chaque lamelle 11 et que les deux lèvres de ce joint 41 se déforment et viennent s'appuyer respectivement contre les rails 12 et 13 ce qui assurent l'étanchéité vis à vis de l'espace extérieur.

Cette pression assure également l'immobilisation des lamelles 11 de l'ouvrant 10 même si l'ouverture n'est que partielle.

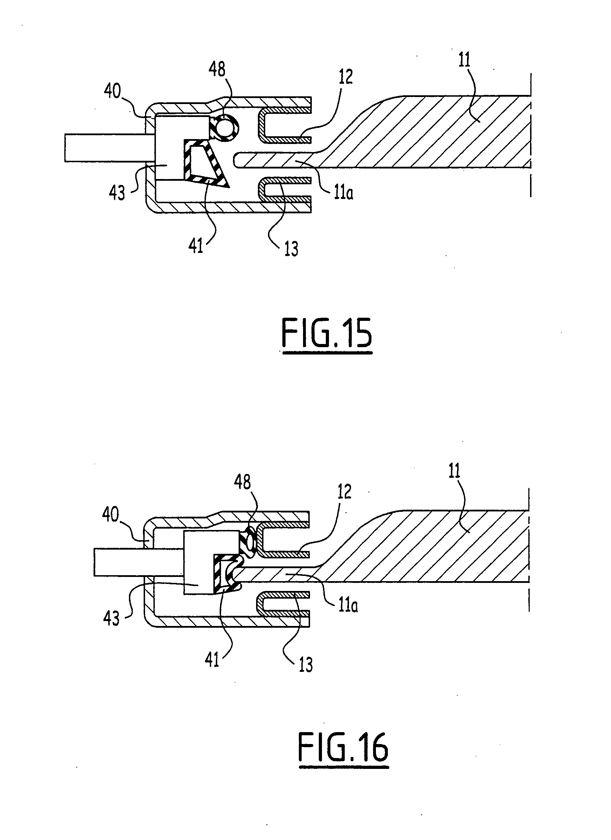

Selon une variante représentée sur les Figs. 15 et 16, le joint 41 est un joint creux par exemple de forme trapézoïdale ou triangulaire ou rectangulaire et le support 42 est muni d'un joint supplémentaire 48 destiné à être appliqué sur le rail extérieur 13. Le joint supplémentaire 48 est par exemple de forme circulaire et est disposé sur le support 42 avec un décalage de niveau d'appui.

Lorsque le support 42 est déplacé vers le rebord externe 11b des lamelles 11, le joint 41 enveloppe partiellement ledit rebord externe 11b des lamelles 11. Le joint supplémentaire 48 est comprimé contre le rail extérieur 13 (Fig. 16) ce qui contribue à l'immobilisation des lamelles 11 de l'ouvrant 10 et à l'étanchéité vis à vis de l'espace extérieur.

En plus, des moyens escamotables de blocage qui assurent également l'étanchéité, les bords transversaux respectivement supérieur et inférieur de l'ouverture 4 sont équipés d'organes d'étanchéité constitués par des joints à lèvres ou des joints compressibles et élastiques.

Les différents systèmes mécaniques ont été décrits à titre d'exemple, d'autres systèmes peuvent également être envisagés.

Le dispositif de guidage selon l'invention permet donc d'assurer le maintien ferme de l'ouvrant dans une position de fermeture et également dans une position intermédiaire de façon à empêcher tout battement et ce dispositif permet également d'assurer une bonne étanchéité dans cette position de fermeture.

## Revendications

1. Dispositif de guidage d'un ouvrant (10) coulissant, par exemple pour véhicule automobile, du type comprenant des lamelles (11 ) articulées et déplaçables verticalement entre une position de libération d'une ouverture (4) et une position de fermeture de ladite ouverture (4), **caractérisé en ce qu'**il comporte, de part et d'autre de l'ouverture (4), un rail extérieur (12) et un rail intérieur (13), des moyens (14, 15 ; 20, 23 ; 30, 32 ; 41, 42 ; 48) escamotables de blocage des lamelles (11 ) entre les rails (12, 13) dans une position intermédiaire et dans la position de fermeture et assurant l'étanchéité dans ladite position de fermeture et des moyens (17, 18 ; 44, 46) de commande desdits' moyens de blocage.

2. Dispositif selon la revendication 1, **caractérisé en ce que** les rails (12, 13) ménagent avec le bord latéral (11b) des lamelles (11 ) un espace suffisant pour le déplacement desdites lamelles (11 ) entre les deux positions.

3. Dispositif selon la revendication 1 ou 2, **caractérisé en ce que** les moyens (14, 15 ; 20, 23) de blocage sont déplaçables perpendiculairement à un plan passant par les lamelles (11 ) et vers le bord latéral (11b) desdites lamelles (11 ).

4. Dispositif selon l'une quelconque des revendications 1 à 3, **caractérisé en ce que** les moyens de blocage comprennent un joint (14) élastique et compressible fixé sur un support (15) ayant un tracé sensiblement parallèle aux rails (12, 13) et déplaçable par les moyens de commande entre une première position dans laquelle le joint (14) est écarté du bord latéral (11a) adjacent des lamelles (11 ) et une seconde position dans laquelle le joint (14) est appliqué contre ce bord latéral (11a) pour bloquer les lamelles (11) entre ledit joint (14) et ledit rail extérieur (12).

5. Dispositif selon la revendication 4, **caractérisé en ce que** le support (15) du joint (14) est relié à au moins deux leviers (17) parallèles et comportant chacun une première extrémité (17a) articulée sur le support (15) et une seconde extrémité (17b) articulée sur un élément fixe (2), chaque levier (17) formant avec le support (15) un angle inférieur à 90°.

6. Dispositif selon l'une quelconque des revendications 1 à 3, **caractérisé en ce que** le rail extérieur (12) est formé par un joint (20) élastique et compressible monté sur un support fixe (21) et les moyens de blocage comprennent un rail (23) formant le rail intérieur (13) et ayant un tracé sensiblement parallèle au joint (20), le rail (23) étant déplaçable par les moyens de commande entre une première position dans laquelle ce rail (23) est écarté du bord latéral (11a) adjacent des lamelles (11) et une seconde position dans laquelle le rail (23) est appliqué contre ce bord latéral (11a) pour bloquer les lamelles (11) entre ledit joint (20) et ledit rail (23).

7. Dispositif selon la revendication 6, **caractérisé en ce que** le rail (23) formant le rail intérieur (13) est relié à au moins deux leviers (17) parallèles et comportant chacun une première extrémité (17a) articulée sur le rail (23) et une seconde extrémité (17b) articulée sur un élément fixe (2), chaque levier (17) formant avec ce rail (23) un angle inférieur à 90°.

8. Dispositif selon l'une quelconque des revendications 1 à 3, **caractérisé en ce que** les moyens de blocage comprennent un profilé (30) en forme de U dont les ailes forment les rails extérieur (12) et intérieur (13) et un joint (32) élastique et compressible monté le long de chaque bord de l'ouverture (4), ledit profilé (30) étant déplaçable par les moyens de commande entre une première position dans laquelle le bord latéral (11a) des lamelles (11) est guidé par les ailes (12, 13) du profilé (30) et une seconde position dans laquelle ce bord latéral (11a) est bloqué entre l'aile intérieure (13) dudit profilé (30) et ledit joint (32).

9. Dispositif selon la revendication 8, **caractérisé en ce que** le profilé (30) est relié à au moins deux leviers (17) parallèles et comportant chacun une première extrémité (17a) articulée sur le profilé (30) et une seconde extrémité (17b) articulée sur un élément fixe (2), chaque levier (17) formant avec le profilé (30) un angle inférieur à 90°.

10. Dispositif selon l'une quelconque des revendications précédentes, **caractérisé en ce que** les moyens de commande sont formés par au moins un actionneur (18) comportant un corps (18a) articulé sur l'élément fixe (2) et une tige (18b) dont l'extrémité libre (18c) est articulée sur les moyens (14, 15 ; 20, 23 ; 30, 32) de blocage et déplaçable selon une direction perpendiculaire aux leviers (17).

11. Dispositif selon l'une quelconque des revendications 1 à 10, **caractérisé en ce que** chaque levier (17) comporte un pied (25) et une tête (26) reliés entre eux par une lame (27) rigide transversalement et flexible longitudinalement, comme par exemple, une lame en acier à ressort de faible épaisseur.

12. Dispositif selon la revendication 1 ou 2, **caractérisé en ce que** les moyens (41, 42) de blocage sont déplaçables dans un plan passant par les lamelles (11) et vers le rebord externe (11b) desdites lamelles (11).

13. Dispositif selon l'une quelconque des revendications 1, 2 ou 12, **caractérisé en ce que** le rail extérieur (12) et intérieur (13) sont montés chacun sur une aile d'un profil (40) en forme de U et les moyens de blocage comprennent un joint (41) fixé sur un support (42) disposé dans le profilé (40) et déplaçable par les moyens de commande entre une première position dans laquelle le joint (41) est écarté du rebord externe (11b) des lamelles (11) et une seconde position dans laquelle le joint (41) est appliqué sur ledit rebord externe (11b) pour bloquer lesdites lamelles (11).

14. Dispositif selon la revendication 13, **caractérisé en ce que** le joint (41) est un joint à lèvres en forme de U.

15. Dispositif selon la revendication 13, **caractérisé en ce que** le joint (41) est un joint creux par exemple de forme trapézoïdale et **en ce que** le support (42) est muni d'un joint supplémentaire (48) destiné à être appliqué sur le rail extérieur (12) dans la seconde position dudit support (42).

16. Dispositif selon l'une quelconque des revendications 12 à 15, **caractérisé en ce que** le support (42) est relié à au moins deux basculeurs (44) en forme de L comportant chacun une première extrémité (44a) articulée sur ledit support (42), une articulation centrale (44b) sur le profilé (40) et une seconde extrémité (44c) reliée de manière articulée au moyen (18) de commande.

17. Dispositif selon la revendication 16, **caractérisé en ce que** les moyens de commande sont formés par un actionneur (18) comportant un corps (18a) articulé sur le profilé (40) et une tige (18b) dont l'extrémité libre (18c) est reliée à la seconde extrémité (44c) du basculeur (44).

18. Véhicule automobile, **caractérisé en ce qu'**il comporte au moins un dispositif de guidage d'un ouvrant (10) coulissant selon l'une quelconque des revendications précédentes.
